# EUROPEAN PATENT SPECIFICATION

(11) **EP 4 296 620 B1**
(45) Date of publication and mention of the grant of the patent: **19.03.2025**
(21) Application number: 21926059.3
(22) Date of filing: 18.02.2021
(51) Int. Cl.: G06Q 30/0251, G01C 21/26, G06Q 30/02

(54) **INFORMATION PRESENTATION DEVICE, VEHICLE CONTROL DEVICE, INFORMATION PRESENTATION TERMINAL, INFORMATION PRESENTATION SYSTEM, AND INFORMATION PRESENTATION METHOD**
INFORMATIONSDARSTELLUNGSVORRICHTUNG, FAHRZEUGSTEUERUNGSVORRICHTUNG, INFORMATIONSDARSTELLUNGSENDGERÄT, INFORMATIONSDARSTELLUNGSSYSTEM UND INFORMATIONSDARSTELLUNGSVERFAHREN
DISPOSITIF DE PRÉSENTATION D'INFORMATIONS, DISPOSITIF DE COMMANDE DE VÉHICULE, TERMINAL DE PRÉSENTATION D'INFORMATIONS, SYSTÈME DE PRÉSENTATION D'INFORMATIONS ET PROCÉDÉ DE PRÉSENTATION D'INFORMATIONS

(43) Date of publication of application: 27.12.2023
(73) Proprietor: NISSAN MOTOR CO., LTD., Kanagawa 221-0023 (JP)
(72) Inventor: ANDO, Yoshito, Atsugi-shi, Kanagawa 243-0123 (JP)
(74) Representative: Global IP Europe Patentanwaltskanzlei
(86) International application number: PCT/JP2021/006131
(87) International publication number: WO 2022/176108

(56) References cited:
- JP-A- 2012 220 993
- JP-A- 2013 041 324
- JP-A- 2019 082 415
- JP-A- 2019 160 055
- JP-A- 2020 022 110
- JP-A- 2020 102 024
- US-A1- 2019 126 767

## Description

### Technical Field

The present invention relates to an information presentation device, a vehicle control device, an information presentation terminal, an information presentation system, and an information presentation method.

### Background Art

An information provision method for providing information for charging a power storage device installed in an electrically driven vehicle is known from the prior art (Patent Document 1). A plurality of charging stations and a plurality of commercial facilities where a user of a vehicle can stay during charging in one of the plurality of charging stations are provided. The method disclosed in Patent Document 1 includes three steps. In the first step, a charging server selects a plurality of candidates from among the plurality of charging stations in accordance with location information. In the second step, the charging server provides information indicating the plurality of selected candidates to a vehicle navigation device, distributing an advertisement for a commercial facility associated with each of the plurality of selected candidates. In the third step, the user refers to advertisements pertaining to the commercial facilities and selects one of the plurality of candidates, and the charging server receives information pertaining to the candidate selected with the vehicle navigation device. Then, when distributing the advertisement, the charging server presents a coupon to the user along with the advertisement.

Patent Document 2 discloses a plurality of charging stations and a plurality of commercial facilities where a user of a vehicle can stay during charging in one of the stations. A method for providing information for the vehicle includes: causing a charging server to select candidates from among the charging stations in accordance with location information about each vehicle and the commercial facilities, causing the charging server to provide a car navigation device with information shouwing the candidates selected; causing the server to deliver an advertisement for a commercial facility associated with each of the candidates selected; and causing the charging server to receive information about a candidate selected with the car navigation device from the candidates by the user referring to the advertisement.

Patent Document 3 discloses a device used at a charging station of electric vehicles. The device generates information including incentive data which can be obtained when a vehicle accepts an invitation to a charging station.

### Prior Art Documents

### Patent Documents

Patent Document 1: JP 2019-082415 A
Patent Document 2: US 2019/0126767 A1
Patent Document 3: JP 2013-41324 A

### Summary of the Invention

### Problem to be Solved by the Invention

In the information provision method described above, users can obtain coupons that can be used at commercial facilities regardless of whether the user uses the chargers installed in charging stations; thus, it is possible that a user only obtain coupons and not charge the vehicle batteries at the charging station. In other words, the above-described information provision method has the problem that installation of vehicle service facilities, such as charging facilities does not lead to an improved ability to attract customers to commercial facilities.

The problem to be solved by the present invention is to provide an information presentation device, a vehicle control device, an information presentation terminal, an information presentation system, and an information presentation method, which execute information presentation that can improve the ability to attract customers to commercial facilities by installing charging facilities.

### Means to Solve the Problem

The above object is solved by an information presentation device, a vehicle control device, an information presentation terminal, an information presentation system, and an information presentation method defined in the appended independent claims. Further advantageous effects can be achieved by preferred embodiments defined in the appended dependent claims.
(1) The information presentation device according to the first aspect of the present invention comprises:
   a receiving unit for receiving vehicle location data indicating a vehicle location of a vehicle, the vehicle location data being the current location information of the vehicle, and the location of the vehicle being measured by GPS;
   a transmitting unit for transmitting, to the vehicle and/or an information presentation terminal, service facility data including location information of a vehicle service facility in a vicinity of the vehicle location or in a vicinity of a travel route of the vehicle, and commercial facility data including location information of a commercial facility associated with the vehicle service facility; and
   an incentive issuing unit for issuing an incentive to use the commercial facility, wherein
   the receiving unit receives facility usage data including information indicating that the vehicle used the vehicle service facility, the facility usage data being transmitted from the vehicle, an information presentation terminal, or a vehicle service/commercial facility, and
   the incentive issuing unit issues the incentive to the user or the vehicle when the facility usage data are received by the receiving unit,
   the transmitting unit transmits data, including information pertaining to the incentive issued by the incentive issuing unit, to an information presentation terminal associated with the vehicle and/or associated with the user on board the vehicle, and
      the information presentation terminal is associated with the vehicle based on at least one of the location of the vehicle corresponding to a location of the information presentation terminal and communication information between the information presentation device and the information presentation terminal when the information presentation terminal is operated to reserve a charging facility.
(2) The second aspect of the present invention provides the vehicle control device provided in a vehicle comprising:
   a vehicle transmitting unit for transmitting vehicle location data indicating a vehicle location of the vehicle, the vehicle location data being the current location information of the vehicle, and the location of the vehicle being measured by GPS;
   a vehicle receiving unit for receiving from an information presentation device service facility data indicating a location of a vehicle service facility in a vicinity of the vehicle location or in a vicinity of a travel route of the vehicle, and commercial facility data including location information of a commercial facility associated with the vehicle service facility; and
   a vehicle display unit for displaying information contained in the commercial facility data, wherein
   the vehicle transmitting unit transmits to the information presentation device data including information indicating that the vehicle used the vehicle service facility when a user selects the vehicle service facility displayed on the vehicle display unit, and
   the vehicle receiving unit receives an incentive to use the commercial facility after use of the selected vehicle service facility is initiated, the vehicle control device being associated with the vehicle and/or associated with a user on board the vehicle,
   wherein
   the vehicle control device is associated with the vehicle based on at least one of the location of the vehicle corresponding to a location of the vehicle control device and communication information between the information presentation device and the vehicle control device when the vehicle control device is operated to reserve a charging facility.
(3) The third aspect of the present invention provides the information presentation terminal operated by a user on board a vehicle comprising:
   a terminal transmitting unit for transmitting location data indicating the user's location, the location data being the current location information of the vehicle, and the location of the vehicle being measured by GPS;
   a terminal receiving unit for receiving from an information presentation device service facility data indicating the location of a vehicle service facility in the vicinity of the user's location or in the vicinity of travel route of the vehicle, and commercial facility data including location information of a commercial facility associated with the vehicle service facility; and
   a terminal display unit for displaying information contained in the commercial facility data, wherein
   the terminal transmitting unit transmits to the information presentation device data including information indicating that the vehicle used the vehicle service facility when the user selects the vehicle service facility displayed on the terminal display unit, and
   the terminal receiving unit receives from the information presentation device an incentive to use the commercial facility after use of the selected vehicle service facility is initiated, the information presentation terminal being associated with the vehicle and/or associated with the user on board the vehicle,
   wherein
   the information presentation terminal is associated with the vehicle based on at least one of the location of the vehicle corresponding to a location of the information presentation terminal and communication information between the information presentation device and the information presentation terminal when the information presentation terminal is operated to reserve a charging facility.
   (4) The fourth aspect of the present invention provides an information presentation system comprising: the vehicle control device mentioned above, the information presentation terminal mentioned above, and the information presentation device mentioned above.

### Effects of the Invention

By means of the present invention, the presentation of information can be executed in such a way that the installation of charging facilities will improve the ability to attract customers to commercial facilities.

### Brief Description of the Drawings

Figure 1 is a block diagram showing an embodiment of the information presentation system according to the present invention.
Figure 2 is a flowchart showing the information processing procedure executed by the information presentation system of Figure 1.
Figure 3 is a schematized diagram showing a display format of the display.
Figure 4 is a flowchart showing the information processing procedure executed by the information processing system according to a modified example of the present invention.

### Embodiments for Implementing the Invention

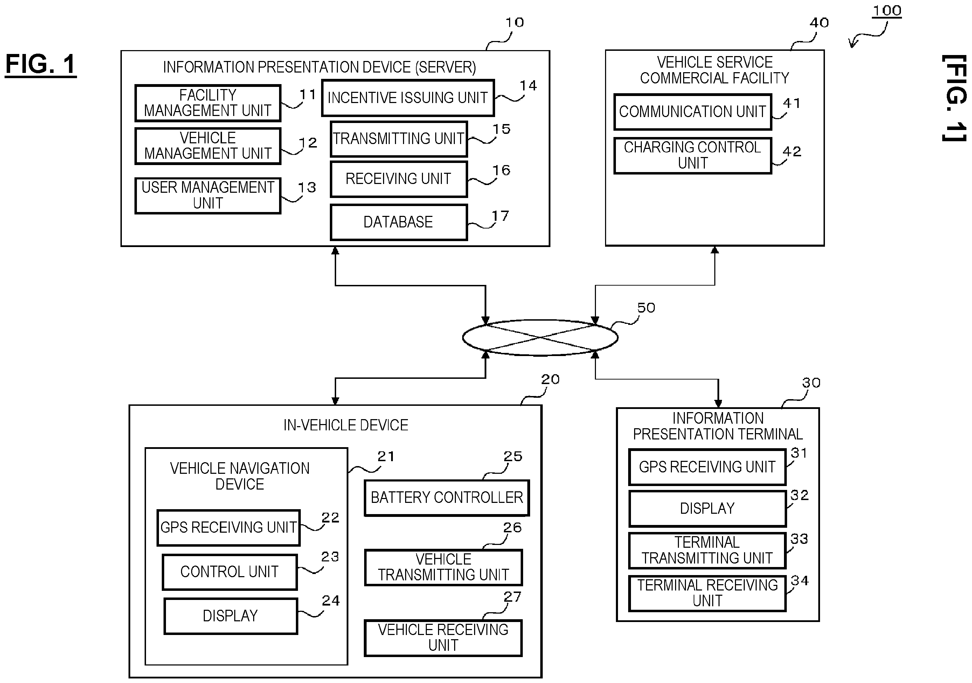

An embodiment of an information presentation system according to the present invention will be described below with reference to the drawings. Figure 1 is a block diagram showing an information presentation system according to the embodiment of the invention, wherein information presentation system 100 according to the embodiment includes an information presentation device (hereinafter also referred to as a server) 10, a vehicle 20, an information presentation terminal 30, a vehicle service/commercial facility 40, and a network 50 that constitutes a telecommunication network. In the system of the embodiment, the server accepts a request from a user or the vehicle 20 to use a vehicle service. In response to the request, the information presentation system 100 extracts, at the server, commercial facilities suitable for the location of the vehicle 20 or the travel route of the vehicle 20 and provides advertising information associated with the extracted commercial facilities to the user or the vehicle 20. Then, if the information presentation system 100 can confirm that a vehicle service facility indicated in the advertisement information was used, the information presentation system issues an incentive to use a commercial facility associated with the vehicle service facility. As a result, the user can use the advertising information to find a commercial facility where the incentive can be accepted due to the use of the vehicle service facility. And because the information presentation system 100 conditions the issuance of the incentive on the use of the vehicle service facility, situations in which the user only receives a coupon with an incentive without using the vehicle service facility can be avoided. Thus, the information presentation system 100 can improve the ability to attract customers to commercial facilities through the installation of vehicle service facilities since the installation of the vehicle service facilities leads to the attraction of users to commercial facilities.

In the following description, the embodiment will be described using a charging facility as an example of a vehicle service facility. The charging facility is equipped with a charging device that can charge a battery mounted in the vehicle 20 (hereinafter also referred to as an in-vehicle battery). The charging facility is installed in the parking lot of a commercial facility or at a location associated with the commercial facility. A location associated with the commercial facility is a location associated with the business operator of the commercial facility. For example, if a particular parking area is connected to multiple commercial facilities, a charging facility within the parking area corresponds to a charging facility associated with a commercial facility. The vehicle service facilities are not limited to charging facilities and can be any facility at which a service for the vehicle 20 can be provided, such as a refueling facility, a car wash facility, a parking facility such as coin-operated parking, etc.

Further, the commercial facilities are not limited to the food and beverage industry, such as cafes, restaurants, and fast-food franchises, but are also convenience stores, department stores, and clothing stores, and other stores where users can purchase goods and services.

The server 10 according to the embodiment is composed of a computer provided with hardware and software, ROM (Read-Only Memory) in which programs are stored, a CPU (Central Processing Unit) that executes the programs stored in the ROM, and RAM (Random-Access Memory) that functions as an accessible storage device. As operating circuits, instead of or together with the CPU (Central Processing Unit), an MPU (Micro Processing Unit), a DSP (Digital Signal Processor), an ASIC (Application-Specific Integrated Circuit), a FPGA (Field Programmable Gate Array), etc., can be used. As shown in Figure 1, the server 10 is equipped with a facility management unit 11, a vehicle management unit 12, a user management unit 13, an incentive issuing unit 14, a transmitting unit 15, and a receiving unit 16 as functional blocks for executing various functions of the server 10. Each functional block realizes each of the functions described further below by software (processor) established in ROM. The server 10 also has a database 17 as a storage medium for storing map data and data received by the server.

The facility management unit 11 manages reservations for charging facilities included in the vehicle service/commercial facility 40. The facility management unit 11 manages the availability of the charging facilities. The facility management unit 11 is communicatively connected to the vehicle service/commercial facility 40 via the network 50. The facility management unit 11 identifies the start time and/or end time of the use of the charging facility from a transmission signal from the charging facility and manages the availability of the charging facility. Further, the facility management unit 11 accepts reservations for the charging facility from users or vehicles. When making a reservation for the charging facility, the user inputs reservation information by operating an in-vehicle device of the vehicle 20 and/or the information presentation terminal 30. The reservation information includes the location of the charging facility, the desired date and time, the desired time of use, etc. The facility management unit 11 determines whether the reservation can be accepted based on the charging facility specified in the reservation information, the desired time of use of the charging facility, and the availability of the charging facility. If a charging facility is available, the facility management unit 11 confirms the reservation and transmits data (reservation confirmation data) that include reservation confirmation information to the vehicle 20 and/or the information presentation terminal 30. If a charging facility is not available that meets the reservation conditions specified by the user, the facility management unit 11 does not confirm the reservation, but transmits information indicating that a reservation cannot be made and information indicating the availability of other charging facilities to the vehicle 20 and/or the information presentation terminal 30.

The facility management unit 11 obtains facility data from the vehicle service/commercial facility 40, and the like, via the receiving unit 16. The facility data are, for example, data input by a business operator of the commercial facility and the vehicle service facility and include advertisement information of the vehicle service/commercial facility 40. Advertisement information includes information pertaining to coupons, business hours, products and services of the facility, etc. The facility data are not limited to information input by the business operator and can include map information. Map information indicates the locations of vehicle service facilities and the locations of commercial facilities. The facility data correspond to service facility data and commercial facility data. The service facility data include at least location information of the vehicle service facility. The service facility data can include information pertaining to the vehicle service facility, such as hours of availability, usage fees, etc., of the vehicle service facility. The commercial facility data include at least location information of the commercial facility associated with the extracted vehicle service facility. The commercial facility data can include information pertaining to the commercial facility, such as hours of availability and usage fees of the commercial facility, advertising information, etc. The facility management unit 11 manages the service facility data and the commercial facility data by including the information contained in the service facility data and the information contained in the commercial facility data in the map data and storing this information in the database 17.

The facility management unit 11 obtains facility usage data from the vehicle service/commercial facility 40, etc., via the receiving unit 16. The facility usage data include information pertaining to the use of the vehicle service facility by the vehicle 20. The information pertaining to the use of the vehicle service facility indicates that the vehicle 20 has started using the vehicle service facility, that the vehicle 20 is using the vehicle service facility, or that the vehicle 20 has ended its use of the vehicle service facility. That is, the information pertaining to the use of the vehicle service facility indicates the usage history of the vehicle service facility by the vehicle 20. For example, in a state in which an in-vehicle battery and a charging device of the charging facility are connected by a charging cable, the charging facility transmits the facility usage data to the server 10 at the time at which electric power is output from the charging device to the in-vehicle battery. The facility management unit 11 can obtain the facility usage data to recognize that the vehicle 20 has used the vehicle service facility. The facility usage data can be transmitted to the server 10 from not only the vehicle service facility, but also the vehicle 20 that is being charged.

The vehicle management unit 12 manages the vehicle 20. The vehicle management unit 12 is communicatively connected to the vehicle 20 via the network 50. The vehicle management unit 12 identifies the vehicle location of the vehicle 20 from a vehicle signal from the vehicle 20. The vehicle signal of the vehicle 20 is a signal transmitted from the vehicle 20 and includes at least vehicle location data. The vehicle location data is the current location information of the vehicle 20, and the location of the vehicle 20 is measured by GPS. The vehicle signal may also include travel route information of the vehicle 20, an ID (identification information) assigned to each vehicle, etc. Further, the vehicle management unit 12 can calculate the travel route from the current location of vehicle to the destination. Information pertaining to the destination of the vehicle 20 is transmitted from the vehicle 20 or the information presentation terminal 30 to the server 10.

The vehicle management unit 12 also obtains battery data of the state of charge (SOC: State of Charge) of the in-vehicle battery from the vehicle signal of the vehicle 20. The vehicle management unit 12 calculates the battery capacity required to travel the route from the current location of the vehicle 20 to the destination (required battery capacity). The vehicle management unit 12 compares the calculated charge capacity and the SOC (equivalent to the amount of remaining charge) of the in-vehicle battery obtained from battery data. Then, if the remaining capacity of the in-vehicle battery is insufficient, the vehicle management unit 12 proposes charging to the user and/or the vehicle 20. The vehicle management unit 12 compares a lower limit value (state of charge threshold) of the preset SOC and the SOC of the in-vehicle battery and can propose charging to the user and/or the vehicle 20 if the SOC of the in-vehicle battery is less than or equal to the SOC lower limit value.

If there is a charging request from the user and/or the vehicle 20 after proposing charging to the user and/or the vehicle 20, the vehicle management unit 12 extracts vehicle service facilities located in the vicinity of the current vehicle location of the vehicle 20 or in the vicinity of the travel route of the vehicle 20. The vicinity of the vehicle location or the travel route is defined as a prescribed range from the location indicated by the vehicle location or travel route on a map. The prescribed range is, for example, a range within which it is possible to make a detour within a time obtained by adding a few percent to several tens of percent to the arrival time to the destination.

The vehicle management unit 12 outputs the commercial facility data and the service facility data managed by the facility management unit 11 to the vehicle 20 and/or the information presentation terminal 30 via the transmitting unit 15. The commercial facility data include at least location information of commercial facilities pertaining to the extracted vehicle service facility.

The user management unit 13 manages user information. When the user uses a service provided by the information presentation system 100, the user inputs information for identifying the user and information indicating the user's preferences to the system. The user identification information includes gender, age, etc. Information indicating user preferences includes information pertaining to frequently visited vehicle service facilities and commercial facilities, information related to favorite foods and beverages, etc. The user management unit 13 manages the user information of each registered user.

The incentive issuing unit 14 issues incentives as reward information for using the commercial facilities. An incentive corresponds to a coupon that can be used by the user. When facility usage data are received by the receiving unit 16, the incentive issuing unit 14 issues an incentive to the user or the vehicle 20. That is, the incentive issuing unit 14 issues an incentive that is triggered by the use of the vehicle service facility. The incentive is issued with limitations on the target commercial facilities, the hours that the coupon can be used, etc. The incentive is issued by displaying a QR code (registered trademark) on a display 32 of the information presentation terminal 30, for example. An incentive is also issued by displaying a coupon redemption code on a display 24 of the vehicle 20, for example. The user can obtain a prescribed benefit by presenting an incentivized coupon to the commercial facility, for example.

The incentive issuing unit 14 measures the time spent by the user at the commercial facility based on the user's location information. The user's location information corresponds to the location information of the vehicle 20 and/or the information presentation terminal 30. The incentive issuing unit 14 measures the time spent by referring to the map data stored in the database 17 and calculating, for example, the time that the user's position is stopped at the location of the commercial facility on the map. The incentive issuing unit 14 may then issue an incentive when the facility usage data are received by the receiving unit 16 and the measured time spent is a prescribed time or more. For example, if the business operator of a commercial facility wants users to stay at the facility for a long period of time, incentives can be given to users who stay for a long time, thereby linking the issuance of incentives to the attraction of users desired by the business operator. Further, by issuing an incentive to users who stay for long periods of time, it is possible to avoid situations in which users stay at a commercial facility, which is the target of the incentive, for short periods of time to receive benefits and then move on to other facilities.

The transmitting unit 15 transmits management data of the facility management unit 11, the management data of the vehicle management unit 12, and/or the management data of the user management unit 13 to the vehicle 20, the information presentation terminal 30, and/or the vehicle service/commercial facility 40. The data transmitted by the transmitting unit 15 are service facility data or commercial facility data, vehicle management data, vehicle service facility reservation confirmation data, etc. The vehicle management data include the travel route, etc., calculated by the vehicle management unit 12. The transmitting unit 15 also transmits incentive data to the vehicle 20 and/or the information presentation terminal 30. The incentive data include information pertaining to the incentive issued by the incentive issuing unit 14.

The transmitting unit 15 transmits a signal that includes the service facility data, the commercial facility data, the vehicle management data, the incentive data to the vehicle 20, and, thus, the display 24 of the vehicle 20 can display the travel route, the location of the vehicle service/commercial facility 40, advertising information of the commercial facility 40, the incentive information, etc. Similarly, the transmitting unit 15 transmits a signal to the information presentation terminal 30 which includes the service facility data, the commercial facility data, and the vehicle management data, and, thus, the display 32 of the information presentation terminal 30 can display the travel route, the location of the vehicle service/commercial facility 40, advertising information of the commercial facility 40, and the incentive information. That is, the transmitting unit 15 transmits a signal for causing the displays 24, 32 to display the travel route, information pertaining to the vehicle service/commercial facility 40, and incentive information.

The receiving unit 16 receives data pertaining to the vehicle 20, the information presentation terminal 30, and/or the vehicle service/commercial facility 40 transmitted from the vehicle 20, the information presentation terminal 30, and/or the vehicle service/commercial facility 40, respectively. The transmitted data pertaining to the vehicle 20 include the vehicle location data, the travel route data calculated by the vehicle 20, the reservation data of the vehicle 20, etc. The reservation data include the reservation information input by the user. For example, if a vehicle service facility displayed on the display 24 of the vehicle 20 or the display 32 of the information presentation terminal 30 is selected, the reservation information includes information pertaining to the selected vehicle service facility. The transmitted data pertaining to the information presentation terminal 30 include the user information, the reservation information input by the user, etc. The transmitted data pertaining to the vehicle service/commercial facility 40 are service facility data, commercial facility data, facility usage data, etc. The facility usage data can be transmitted from the vehicle 20 or the information presentation terminal 30.

The database 17 stores the management data of the facility management unit 11, the management data of the vehicle management unit 12, and/or the management data of the user management unit 13, as well as map data, etc.

The vehicle 20 is equipped with a vehicle navigation device 21, a battery controller 25, a vehicle transmitting unit (vehicle transmitter) 26, and a vehicle receiving unit (vehicle receiver) 27. The vehicle navigation device 21, the battery controller 25, the vehicle transmitting unit 26, and the vehicle receiving unit 27 are part of the configuration of the vehicle control device. The vehicle 20 is an electric vehicle or a hybrid vehicle equipped with an in-vehicle battery. The vehicle 20 can be a gasoline vehicle. The vehicle navigation device 21 computes the current location of the vehicle 20, the travel route of the vehicle 20, etc., and provides route guidance from the current location of the vehicle 20 to the destination. The vehicle navigation device 21 includes a GPS receiving unit 22, a control unit 23, and a display 24. The GPS receiving unit 22 receives GPS signals. The control unit 23 measures the current location of the vehicle 20 from the location information contained in the GPS signal. The control unit 23 also computes the travel route to the destination based on destination information input by the user. The control unit 23 causes the current location, the travel route, information pertaining to the vehicle service/commercial facility 40, and incentive information to be displayed on the display 24. The display 24 is a touch panel type display device (equivalent to a vehicle display unit).

The battery controller 25 manages the state of the in-vehicle battery during charging and discharging. The vehicle transmitting unit 26 transmits the management data of the vehicle 20, the data input by the user through the operation of the display 24, and other data to the server 10. The vehicle receiving unit 27 receives the service facility data, the commercial facility data, the incentive data, etc., transmitted from the server 10.

The information presentation terminal 30 is a terminal operated by the user and is a portable mobile terminal, such as a smartphone, owned by the user. The information presentation terminal 30 includes a GPS receiving unit 31, the display 32, a terminal transmitting unit (terminal transmitter) 33, and a terminal receiving unit (terminal receiver) 34. The GPS receiving unit 31 receives GPS signals. The information presentation terminal 30 measures the current location of the information presentation terminal 30 from the location information included in the GPS signal. The current location of the information presentation terminal 30 corresponds to the current location of the user. The display 24 is a touch panel display device (equivalent to a terminal display unit). The terminal transmitting unit 33 transmits the management data of the information presentation terminal 30, the data input by the user through operation of the display 32, and other data, to the server 10. The terminal receiving unit 34 receives the service facility data, the commercial facility data, the incentive data, etc., transmitted from the server 10.

The vehicle service/commercial facility 40 has a communication unit 41 and a charging control unit 42. The communication device 41 is a communication device capable of communicating with the server 10. The communication unit 41 may communicate with the vehicle 20. The communication unit 41 transmits the service facility data, the commercial facility data, the facility usage data, etc. The charging control unit 42 controls the charging of the in-vehicle battery.

The vehicle 20 and the information presentation terminal 30 can be communicatively connected to each other in order to associate vehicle 20 with the information presentation terminal 30. The connection between the vehicle 20 and the information presentation terminal 30 can be realized by using in-vehicle Wi-Fi, Bluetooth, etc. When the vehicle 20 and the information presentation terminal 30 are communicatively connected to each other, the vehicle transmitting unit 26 and the vehicle receiving unit 27 may transmit and receive via the terminal transmitting unit 33 and the terminal receiving unit 34. Further, the transmission and reception of the terminal transmitting unit 33 and the terminal receiving unit 34 can be performed via the vehicle transmitting unit 26 and the vehicle receiving unit 27.

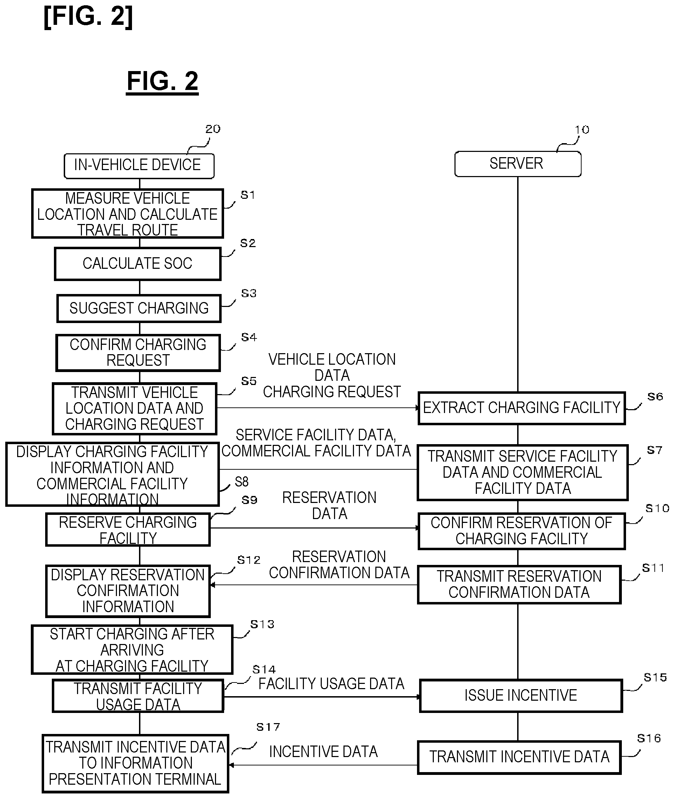

An overview of the information processing procedure executed in the system of the present embodiment will now be described. Figure 2 is a flowchart showing the information processing procedure.

In Step S1, the control unit 23 of the vehicle 20 measures the vehicle location of the vehicle 20 based on the GPS signal and computes the travel route from the vehicle location to the destination. In Step S2, the battery controller 25 calculates the SOC of the in-vehicle battery. In Step S3, the control unit 23 calculates the battery capacity required from the current location of the vehicle 20 to the destination based on the travel route. The control unit 23 compares the calculated battery capacity with the current SOC. If the current SOC is less than or equal to the required battery capacity, the control unit 23 determines that the in-vehicle battery requires charging, which is then proposed to the user. The charging proposal is performed by displaying the information on the display 24.

In Step S4, the control unit 23 confirms the input of the charging request from the user. In Step S5, the control unit 23 uses the vehicle transmitting unit 26 to transmit the vehicle location data and the charging request to the server 10.

In Step S6, the vehicle management unit 12 of the server 10 extracts vehicle service facilities and commercial facilities located in the vicinity of the current location of the vehicle 20 or in the vicinity of the travel route of the vehicle 20 based on the vehicle location data and the map data. In Step S7, the vehicle management unit 12 transmits the service facility data of the extracted charging facilities and the commercial facility data of the commercial facilities associated with the extracted charging facilities to the vehicle 20.

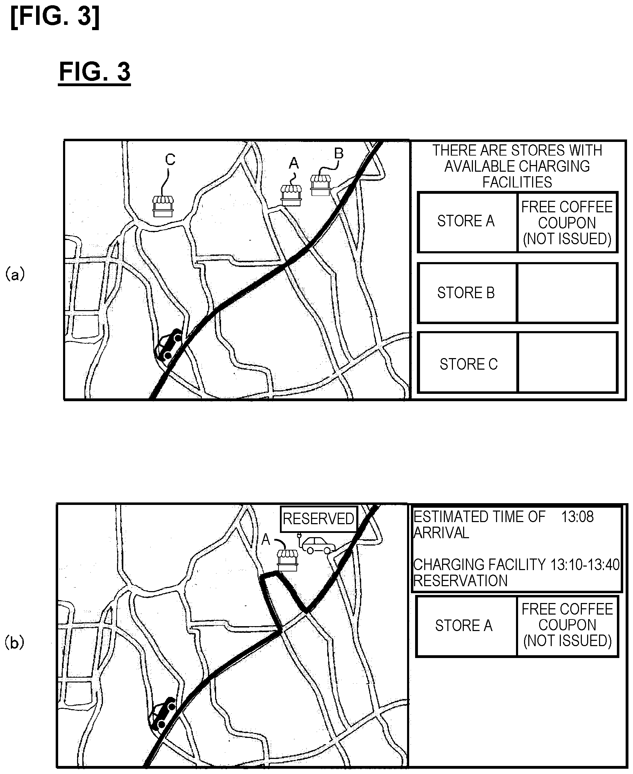

In Step S8, the vehicle 20 receives the service facility data and the commercial facility data, and the control unit 23 displays the extracted charging facility information and commercial facility information on the display 24. Figure 3 shows a schematized diagram of a display screen of the display 24.

Figure 3(a) is a screen displayed on the display 24 in the control process of Step S8. As shown in Figure 3(a), in addition to the map and the travel route to the destination, the display 24 shows charging facilities as candidate charging destinations and commercial facilities (stores A to C) associated with the charging facilities. In Figure 3(a), the charging facilities are located in the parking lots of stores A to C, so that the display of stores A to C also serves to indicate the charging facilities. The user can identify the charging facilities and commercial facilities by observing the message "there are stores with available charging facilities" on the display 24. Since stores A to C are commercial facilities extracted by the server 10, charging facilities located near the current location t or the travel route of the vehicle 20 are displayed. Further, advertising information for stores A to C is displayed on the display 24. The order in which the advertising information for stores A to C is displayed gives preference to advertisements of sponsors and partner companies of the information presentation system 100. For example, in the example of Figure 3(a), store A is a sponsor of the information presentation system 100 and has prepared coupons to attract customers through the information presentation system 100. Stores B and C are not sponsors. Thus, the advertisement display of store A is given higher priority than the advertisement display of stores B and C, and the advertising information for store A is displayed above that of stores B, C. Further, the advertisement display for store A includes a coupon display (for example, a coupon for free coffee). In the display examples of Figures 3(a) and 3(b), "not issued" appears in the coupon display area and was added for the purpose of explaining the present embodiment; the "not issued" display can be omitted. The "not issued" display indicates that the coupon is invalid, i.e., an incentive has not been issued because the vehicle 20 is not using the charging facility of store A.

When viewing the display screen of Figure 3(a), the user can see that the advertisement for store A has higher priority than the advertisements for stores B, C and that, further, an incentive in the form of a coupon could be obtained by using the charging facility at store A. This type of display enhances the ability of attracting customers to store A. The order of priority for displaying advertisements is managed by the facility management unit 11 of the server 10, and the priority information is contained in the commercial facility data. Further, the prioritized display of advertisements is not limited to the display order shown in Figure 3(a); for example, the display format for store A could be made more prominent than that for stores B and C. Further, in addition to the presence or absence of sponsors, the order of priority for the display of advertisements can be assigned in accordance with user preferences. User preferences can be obtained by using the information managed by the user management unit 13.

In Step S9, the user operates the touch panel of the display 24 and selects a commercial facility (store A) that has a charging facility, and the control unit 23 reserves a charging facility associated with the commercial facility (store A) and transmits reservation data to the server 10. The reservation data include the reservation time in addition to a request for reserving a charging facility associated with the commercial facility (store A). The reservation time can be the desired time entered by the user or a time calculated from the required charging time and the estimated time of arrival at store A based on a route calculated by the control unit 23. Further, when the user selects a commercial facility, the control unit 23 can recalculate the travel route to arrive at the destination via the selected commercial facility.

In Step S10, the facility management unit 11 confirms the reservation after checking the availability of the charging facility associated with the commercial facility (store A). In Step S11, the facility management unit 11 transmits the reservation confirmation data to the vehicle 20. The reservation confirmation data include the location information of the charging facility to be reserved, the confirmed reservation time, etc.

In Step S12, the control unit 23 of the vehicle 20 causes the display 24 to display the confirmed reservation information together with a travel route via the commercial facility (store A). Figure 3(b) shows the screen displayed on the display 24 in the control process of Step S12.

In Step S13, when the vehicle 20 arrives at a commercial facility (store A) and uses the charging facility, the battery controller 25 starts charging the in-vehicle battery. In Step S14, the control unit 23 transmits the facility usage data to the server 10 at the time at which the charging facility is used. The facility usage data can include the location information of the vehicle 20, the location information of the charging facility, the location information of the commercial facility, and POI information of the commercial facility, in addition to the fact that the charging facility was used. The facility usage data can be transmitted to the server from not only the vehicle 20 but also the vehicle service/commercial facility 40 corresponding to store A. Here, the accuracy of the location information transmitted from the vehicle service/commercial facility 40 is affected by the accuracy of the GPS. For example, if stores A to C are densely clustered and GPS accuracy is poor, the server may receive location information from the vehicle service/commercial facility 40 corresponding to store A, but may not be able to identify at which charging facility associated with which store, A to C, the vehicle was charged. In such cases, communication between the vehicle 20 and the vehicle service/commercial facility 40 can be used to transmit identification information of the vehicle 20 to the server 10 in addition to the facility usage data. Another method, for example, is during charging of an in-vehicle battery at a charging facility, a display screen can be displayed on the display 32 of the information presentation terminal 30 via communication between the vehicle 20 and the information presentation terminal 30 on which the user can specify at which store, A to C, the vehicle is being charged, where the vehicle 20 or the information presentation terminal 30 can transmit the facility usage data to the server 10 based on the users decision. Further, the time at which the facility usage data is transmitted can be after the arrival of the vehicle 20 at the charging facility, when the charging status of the vehicle 20 becomes charging, or when charging is completed. Alternatively, after charging has started and upon entering the store of the vehicle service/commercial facility 40, the user can be notified to check in by means of a display such as "have you started charging?" on the display 32 of the information presentation terminal 30, and the facility usage data can be transmitted at the time of the user's approval.

In Step S15, the receiving unit 16 receives the facility usage data, and the incentive issuing unit 14 issues an incentive by validating a coupon for the commercial facility (store A). In Step S16, the incentive issuing unit 14 uses the transmitting unit 15 to transmit the incentive data. The incentive data includes such information as the fact that the coupon has been validated, the time during which the coupon can be used, etc.

In Step S17, the vehicle 20 uses the vehicle transmitting unit 26 to transmit the incentive data received from the server 10 to the information presentation terminal 30. The user subsequently uses the validated coupon at the store A to receive a coffee.

As described above, an information presentation device 10 according to the present embodiment comprises the receiving unit 16 for receiving vehicle location data indicating the vehicle location of the vehicle 20, the transmitting unit 15 for transmitting service facility data including location information of a vehicle service facility in the vicinity of the vehicle location or in the vicinity of the travel route of the vehicle 20, and commercial facility data including location information of a commercial facility associated with the vehicle service facility, and the incentive issuing unit 14 for issuing an incentive to use the commercial facility. The receiving unit 16 then receives facility usage data pertaining to the use of the vehicle service facility by the vehicle 20, and when the facility usage data are received by the receiving unit, the incentive issuing unit 14 issues an incentive to the user or the vehicle. As a result, since incentives are issued based on the usage history of the charging facility (track record of the charging facility being used or use of the charging facility being initiated), the installation of vehicle service facilities, such as charging facilities, leads to an improved ability to attract customers to commercial facilities. As a result, information can be presented in such a way that it is possible to improve the ability to attract customers to commercial facilities through the installation of charging facilities.

According to the information presentation device 10 of this embodiment, the transmitting unit 15 transmits data, including information pertaining to the incentive issued by the incentive issuing unit 14, to the information presentation terminal 30 associated with the vehicle 20. As a result, this allows a user carrying the information presentation terminal 30 to carry a coupon with an incentive, thereby increasing the usefulness of the coupon.

Further, according to the information presentation device 10 of the present embodiment, the incentive issuing unit 14 measures the time spent by the user at the commercial facility, the receiving unit 16 receives facility usage data, and an incentive is issued if the time spent is greater than or equal to a prescribed period of time. As a result, it is possible to avoid situations in which users stay at a commercial facility, which is the target of the incentive, for short periods of time to receive benefits and then move on to other facilities.

Further, according to the information presentation device 10 of the present embodiment, when the receiving unit 16 receives reservation data indicating a reservation for a vehicle service facility, the facility management unit 11 confirms the reservation for the vehicle service facility. It is thereby possible to reliably receive reservations and enhance the reliability of the system.

Further, according to the information presentation device 10 of the present embodiment, the vehicle management unit 12 computes a travel route by way of the vehicle service facility, and the transmitting unit 15 transmits a signal for causing the vehicle 20 and/or the information presentation terminal 30 to display the travel route computed by the vehicle management unit 12. The user can thus ascertain the travel route that passes via the vehicle service facility.

Further, according to the information presentation device 10 of the present embodiment, the vehicle management unit 12 manages the state of charge of the in-vehicle battery, and the transmitting unit 15 transmits the service facility data and commercial facility data if the state of charge is less than or equal to a prescribed state of charge threshold. It is thus possible to present to the user information pertaining to charging facilities associated with commercial facilities that attract customers, at the time at which the remaining amount of charge on the in-vehicle battery is low.

A vehicle control device (equivalent to a control device included in the vehicle 20) of the present embodiment comprises the vehicle transmitting unit 26 for transmitting vehicle location data indicating the location of the vehicle 20, the vehicle receiving unit 27 for receiving the service facility data indicating the locations of vehicle service facilities in the vicinity of the vehicle location or in the vicinity of the travel route of the vehicle 20, and commercial facility data including the location information of commercial facilities associated with the vehicle service facilities, and a vehicle display unit (equivalent to the display 24) for displaying the information contained in the commercial facility data. When the user selects a vehicle service facility displayed on the display unit, the vehicle transmitting unit 26 then transmits data that include information pertaining to the selected vehicle service facility, and, after use of the selected vehicle service facility is started, the vehicle receiving unit 27 receives an incentive to use the commercial facility. Thus, information can be presented in such a way that it is possible to improve the ability to attract customers to commercial facilities through the installation of charging facilities.

Further, the information presentation system 100 or an information presentation method executed by a processor of the present embodiment comprises receiving vehicle location data indicating the vehicle location of the vehicle 20, extracting the vehicle service facility located in the vicinity of the vehicle location or in the vicinity of the vehicle's 20 travel route, and a commercial facility pertaining to the vehicle service facility, transmitting service facility data including location information of the extracted vehicle service facility and commercial facility data including the location information of the extracted commercial facility, receiving facility usage data pertaining to the use of the vehicle service facility by the vehicle 20, and issuing an incentive to use the commercial facility to the vehicle 20 or the user when the facility usage data are received. As a result, information can be presented in such a way that it is possible to improve the ability to attract customers to commercial facilities through the installation of charging facilities.

In the present embodiment, the association between the vehicle 20 and the user (information presentation terminal 30) is not limited to a method of establishing communication between the vehicle 20 and the information presentation terminal 30 and can be one of the following methods. For example, after the user boards the vehicle, the server 10, the vehicle 20, or the information presentation terminal 30 can recognize that the location of the vehicle 20 corresponds to the location of the information presentation terminal 30 (i.e., in the same location, or the locations moving synchronously), thereby associating the vehicle 20 and the information presentation terminal 30. In another method, the vehicle 20 detects a user boarding the vehicle by image recognition using an in-vehicle camera, voice recognition using a microphone, or the like, and sends identification information of the detected user to the server 10. The server 10 identifies the corresponding information presentation terminal 30 from the registered user information. Further, in another method, when the user operates the information presentation terminal 30 to reserve a charging facility, communication is established between the server 10 and the information presentation terminal 30, so that the communication information can be used to associate the two. According to the information presentation device 10 of the present embodiment, the transmitting unit 15 transmits data including information pertaining to the incentive issued by the incentive issuing unit 14 to the information presentation terminal associated with the user on board the vehicle. It is thus possible to enhance the usefulness of coupons.

Further, in this embodiment, if several users are on board the vehicle 20, the server 10 may issue a coupon to each passenger. The number of passengers can be determined using a camera recognition function, a seatbelt reminder function, etc., provided in the vehicle 20. The server 10 may send coupons for all passengers to one information presentation terminal 30 or may send a coupon to the information presentation terminal 30 of each user.

In this embodiment, an incentive is issued when the time spent at a commercial facility is greater than or equal to a prescribed period of time, but an incentive can be issued when the time spent at a commercial facility is less than a prescribed period of time. For example, when the time spent at a commercial facility becomes prolonged, such as during charging in normal charging mode, restaurants and other eating establishments may need to keep the charging time as short as possible to increase their table turnover rate. In light of such needs, the convenience of the service can be increased by issuing incentives when the time spent at the given commercial facility is less than a prescribed period of time.

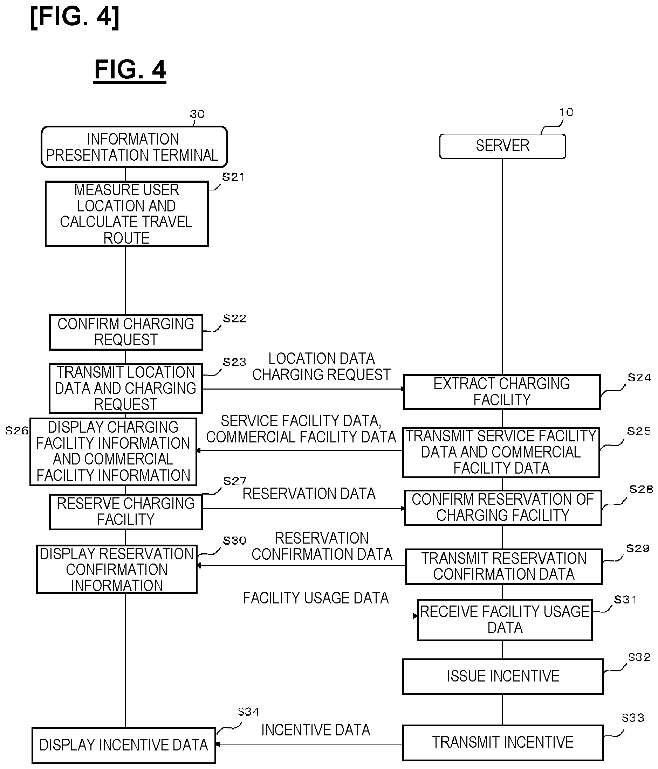

In a modified example of the present embodiment, part of the control flow shown in Figure 2 can be executed by the information presentation terminal 30. Figure 4 is a flowchart showing the information processing procedure according to the modified embodiment example. Of the control process of the information presentation terminal 30, the control flow of Steps S21, S22, S23, S26, S27, and S30 is the same as the control flow of Steps S1, S4, S5, S8, S9, and S12 of the information processing procedure of the present embodiment. Further, in the control process of server 10, the control flow of Steps S24, S25, S28, S29, S32, and S33 is the same as the control flow of Steps S6, S7, S10, S11, S15, and S16, of the information processing procedure of the present embodiment. However, the display of the display 24 in the control flow of Figure 2 can be replaced with the display of the display 32. Further, the vehicle location can be replaced with the user's location. Further, in the control flow of Figure 2, charging is suggested to the user at the time the SOC drops, but in the modified example, a charging request can be made at any time by the user. The new flow that is added in the control flow of the modified example will be described below.

In the control process performed by the server 10, the server 10 receives facility usage data from the vehicle 20 or the vehicle service/commercial facility 40 in Step S31. In the control process of the information presentation terminal 30, the display 32 displays incentive data in Step S34.

As described above, the information presentation terminal 30 according to the present embodiment comprises the terminal transmitting unit 33 for transmitting location data indicating the user's location, the terminal receiving unit 34 for receiving the service facility data indicating the locations of vehicle service facilities in the vicinity of the user's location or in the vicinity of the travel route of the vehicle, and commercial facility data including the location information of commercial facilities associated with the vehicle service facilities, and a terminal display unit (equivalent to the display 32) for displaying the information contained in the commercial facility data. When the user selects a vehicle service facility displayed on the display unit, the terminal transmitting unit 33 transmits data that include information pertaining to the selected vehicle service facility, and, after use of the selected vehicle service facility has started, the terminal receiving unit 34 receives the incentive to use the commercial facility. Thus, information can be presented in such a way that it is possible to improve the ability to attract customers to commercial facilities through the installation of charging facilities.

The vehicle service facility can be, for example, a refueling facility, a car wash facility, a parking facility such as coin-operated parking lot. In the case that the vehicle service facility is a refueling facility, the vehicle can recognize that a refueling facility is being used by detecting that the refueling port is open or that the value of the fuel sensor is increasing, so that the facility usage data can be transmitted to the server 10 as data indicating that a refueling facility is being used at the time at which these detections occur. Further, the refueling facility or the information presentation terminal 30 may transmit the facility usage data to the server 10.

In the case that the vehicle service facility is a car wash facility, the vehicle can recognize that a car wash facility is being used by detecting water with a raindrop sensor after parking in a prescribed parking space, so that facility usage data can be transmitted to the server 10 at the time water is detected. Further, the car wash facility or the information presentation terminal 30 may transmit the facility usage data to the server 10.

Further, in the case that the vehicle service facility is a parking facility, such as a coin-operated parking facility, the parking facility can recognize that the parking facility is being used by detecting the opening of the gate to the parking facility; thus, facility usage data can be transmitted to the server 10 at the time that the opening of the gate is detected. Further, the vehicle 20 or the information presentation terminal 30 can transmit the facility usage data.

Further, the vehicle service facility can be a commercial facility with a drive-through (a function in which goods or services are provided while the user is in the vehicle). For example, when the user desires to purchase food and beverages, pick up medicine, etc., while in the vehicle, the user operates the navigation device 21 and/or the information presentation terminal 30 to select a category, such as fast food, pharmacy, or the like, and searches for a vehicle service/commercial facility 40 that is close to the current location of the vehicle or the travel route. The search for a vehicle service/commercial facility 40 is performed by the server 10, the vehicle 20, or the information presentation terminal 30. Of the vehicle service/commercial facilities 40 extracted from the search, the locations and advertising information of stores of the information presentation system's 100 sponsors are preferentially displayed on the displays 24, 32. Subsequently, when the user uses a facility that is preferentially displayed, the facility usage data are transmitted from the vehicle 20, etc., to the server 10. The incentive issuing unit 14 of the server 10 issues an incentive. The incentive can be, for example, a coupon that can be redeemed at the next visit, or a coupon that can be used at another affiliated store. Thus, information can be presented in such a way that it is possible to improve the ability to attract customers to commercial facilities through the installation of drive-through facilities.

### Descriptions of the Reference Symbols

- 10: Information presentation device
- 11: Facility management unit
- 12: Vehicle management unit
- 13: User management unit
- 14: Incentive issuing unit
- 15: Transmitting unit
- 16: Receiving unit
- 17: Database
- 20: Vehicle
- 21: Vehicle navigation device
- 22: GPS receiving unit
- 23: Control unit
- 24: Display
- 25: Battery controller
- 26: Vehicle transmitting unit
- 27: Vehicle receiving unit
- 30: Information presentation terminal
- 31: GPS receiving unit
- 32: Display
- 33: Terminal transmitting unit
- 34: Terminal receiving unit
- 100: Information presentation system

## Claims

1. An information presentation device (10) comprising:
a receiving unit (16) for receiving vehicle location data indicating a vehicle location of a vehicle (20), the vehicle location data being the current location information of the vehicle (20), and the location of the vehicle (20) being measured by GPS;
a transmitting unit (15) for transmitting to the vehicle (20) and/or an information presentation terminal (30) service facility data including location information of a vehicle service facility in a vicinity of the vehicle location or in a vicinity of a travel route of the vehicle, and commercial facility data including location information of a commercial facility associated with the vehicle service facility; and
an incentive issuing unit (14) for issuing an incentive to use the commercial facility, wherein
the receiving unit (16) receives facility usage data including information indicating that the vehicle used the vehicle service facility, the facility usage data being transmitted from the vehicle (20), an information presentation terminal (30), and/or a vehicle service/commercial facility (40), and
the incentive issuing unit (14) issues the incentive to a user on board the vehicle or the vehicle when the facility usage data are received by the receiving unit,
the transmitting unit (15) transmits data, including information pertaining to the incentive issued by the incentive issuing unit (14), to an information presentation terminal (30) associated with the vehicle (20) and/or associated with the user on board the vehicle (20), and
the information presentation terminal (30) is associated with the vehicle based on at least one of the location of the vehicle corresponding to a location of the information presentation terminal (30) and communication information between the information presentation device (10) and the information presentation terminal (30) when the information presentation terminal (30) is operated to reserve a charging facility.

2. The information presentation device (10) according to claim 1, wherein
the incentive issuing unit (14)
measures time spent by the user at the commercial facility based on the user's location and/or the vehicle location, and
issues an incentive when the facility usage data are received by the receiving unit (16) and the time spent by the user is a prescribed time or more.

3. The information presentation device (10) according to any one of claims 1 to 2, wherein
the vehicle service facility is a facility for charging an in-vehicle battery of the vehicle.

4. The information presentation device (10) according to any one of claims 1 to 3, further comprising
a facility management unit that manages reservations for the vehicle service facility, wherein
the facility management unit confirms the reservations for the vehicle service facility, when the receiving unit (16) receives reservation data indicating the reservation for the vehicle service facility.

5. The information presentation device (10) according to any one of claims 1 to 4, further comprising
a vehicle management unit that manages the vehicle, wherein
the vehicle management unit calculates a travel route via the vehicle service facility, and
the transmitting unit (15) transmits a signal for causing an in-vehicle device of the vehicle and/or an information presentation terminal (30) to display the travel route calculated by the vehicle management unit.

6. The information presentation device (10) according to any one of claims 1 to 4, further comprising
a vehicle management unit that manages the vehicle, wherein
the vehicle management unit manages the of an in-vehicle battery of the vehicle, and
the transmitting unit (15) transmits the service facility data and the commercial facility data if a state of charge is less than or equal to a prescribed state of charge threshold.

7. The information presentation device (10) according to any one of claims 1 to 6, wherein
the receiving unit (16) receives the facility usage data from the vehicle or the information presentation terminal (30).

8. The information presentation device (10) according to any one of claims 1 to 7, wherein
the incentive issuing unit (14) is further configured to issue incentive when a time spent by the user at the commercial facility is greater than or equal to a prescribed period of time.

9. The information presentation device (10) according to any one of claims 1 to 8, wherein
the information presentation terminal (30) is associated with the vehicle based on the location of the vehicle corresponding to the location of the information presentation terminal.

10. A vehicle control device (20) provided in a vehicle, comprising:
A vehicle transmitting unit (26) for transmitting vehicle location data indicating a vehicle location of the vehicle (20), the vehicle location data being the current location information of the vehicle (20), and the location of the vehicle (20) being measured by GPS;
a vehicle receiving unit (27) for receiving from an information presentation device (10) service facility data indicating a location of a vehicle service facility in a vicinity of the vehicle location or in a vicinity of a travel route of the vehicle, and commercial facility data including location information of a commercial facility associated with the vehicle service facility; and
a vehicle display unit for displaying information contained in the commercial facility data, wherein
the vehicle transmitting unit (26) transmits to the information presentation device (10) data including information indicating that the vehicle used the vehicle service facility when a user selects the vehicle service facility displayed on the vehicle display unit, and
the vehicle receiving unit (27) receives an incentive to use the commercial facility after use of the selected vehicle service facility is initiated, the vehicle control device (20) being associated with the vehicle and/or associated with a user on board the vehicle,
wherein
the vehicle control device (20) is associated with the vehicle based on at least one of the location of the vehicle corresponding to a location of the vehicle control device (20) and communication information between the information presentation device (10) and the vehicle control device (20) when the vehicle control device (20) is operated to reserve a charging facility.

11. An information presentation terminal (30) operated by a user on board a vehicle (20), comprising:
a terminal transmitting unit (33) for transmitting location data indicating the user's location, the location data being the current location information of the vehicle (20), and the location of the vehicle (20) being measured by GPS;
a terminal receiving unit (34) for receiving from an information presentation device (10) service facility data indicating the location of a vehicle service facility in the vicinity of the user's location or in the vicinity of travel route of the vehicle, and commercial facility data including location information of a commercial facility associated with the vehicle service facility; and
a terminal display unit for displaying information contained in the commercial facility data, wherein
the terminal transmitting unit (33) transmits to the information presentation device (10) data including information indicating that the vehicle used the vehicle service facility when the user selects the vehicle service facility displayed on the terminal display unit, and
the terminal receiving unit (34) receives from the information presentation device (10) an incentive to use the commercial facility after use of the selected vehicle service facility is initiated, the information presentation terminal (30) being associated with the vehicle (20) and/or associated with the user on board the vehicle (20),
wherein
the information presentation terminal (30) is associated with the vehicle based on at least one of the location of the vehicle corresponding to a location of the information presentation terminal (30) and communication information between the information presentation device (10) and the information presentation terminal (30) when the information presentation terminal (30) is operated to reserve a charging facility.

12. An information presentation system (100) comprising: a vehicle control device (20) according to claim 10, the information presentation terminal (30) according to claim 11, and the information presentation device (10) according to any one of claims 1 to 9.

13. An information presentation method for presenting information pertaining to a vehicle service facility and a commercial facility by using a processor (10), wherein
the processor receives vehicle location data indicating the vehicle location of a vehicle (20), the vehicle location data being the current location information of the vehicle (20), and the location of the vehicle (20) being measured by GPS,
the method comprising:
extracting a vehicle service facility located in the vicinity of the vehicle location or the vicinity of the vehicle's travel route, and a commercial facility associated with the vehicle service facility;
transmitting to the vehicle (20) and/or an information presentation terminal (30) the service facility data including the location information of the extracted vehicle service facility and the commercial facility data including the location information of the extracted commercial facility;
receiving facility usage data including information indicating that the vehicle used the vehicle service facility, the facility usage data being transmitted from the vehicle (20), an information presentation terminal (30), or a vehicle service/commercial facility (40);
issuing an incentive to use the commercial facility to a user on board the vehicle or the vehicle upon receipt of the facility usage data;
transmitting data, including information pertaining to the incentive issued, to an information presentation terminal (30) associated with the vehicle (20) and/or associated with the user on board the vehicle (20);
wherein the information presentation terminal (30) is associated with the vehicle based on at least one of the location of the vehicle corresponding to a location of the information presentation terminal (30) and communication information between the processor (10) and the information presentation terminal (30) when the information presentation terminal (30) is operated to reserve a charging facility.

## Patentansprüche

1. Informationspräsentationsvorrichtung (10), die aufweist:
eine Empfangseinheit (16) zum Empfangen von Fahrzeugstandortdaten, die einen Fahrzeugstandort eines Fahrzeugs (20) anzeigen, wobei die Fahrzeugstandortdaten die aktuellen Standortinformationen des Fahrzeugs (20) sind und der Standort des Fahrzeugs (20) durch GPS gemessen wird;
eine Sendeeinheit (15) zum Senden an das Fahrzeug (20) und/oder ein Informationspräsentationsendgerät (30) von Serviceeinrichtungsdaten, die Standortinformationen einer Fahrzeugserviceeinrichtung in einer Umgebung des Fahrzeugstandorts oder in einer Umgebung einer Fahrroute des Fahrzeugs enthalten, und von Geschäftseinrichtungsdaten, die Standortinformationen einer Geschäftseinrichtung enthalten, die mit der Fahrzeugserviceeinrichtung assoziiert ist, und
eine Anreizausgabeeinheit (14) zum Ausgeben eines Anreizes zur Nutzung der Geschäftseinrichtung, wobei
die Empfangseinheit (16) Einrichtungsnutzungsdaten empfängt, die Informationen enthalten, die anzeigen, dass das Fahrzeug die Fahrzeugserviceeinrichtung genutzt hat, wobei die Einrichtungsnutzungsdaten von dem Fahrzeug (20), einem Informationspräsentationsendgerät (30) und/oder einer Fahrzeugservice-/Geschäftseinrichtung (40) gesendet werden, und
die Anreizausgabeeinheit (14) den Anreiz an einen Benutzer an Bord des Fahrzeugs oder an das Fahrzeug ausgibt, wenn die Einrichtungsnutzungsdaten von der Empfangseinheit empfangen werden,
die Sendeeinheit (15) Daten, die Informationen enthalten, die den von der Anreizausgabeeinheit (14) ausgegebenen Anreiz betreffen, an ein Informationspräsentationsendgerät (30) sendet, das mit dem Fahrzeug (20) und/oder dem Benutzer an Bord des Fahrzeugs (20) assoziiert ist, und das Informationspräsentationsendgerät (30) mit dem Fahrzeug basierend auf dem Standort des Fahrzeugs, der einem Standort des
Informationspräsentationsendgeräts (30) entspricht, und/oder Kommunikationsinformationen zwischen der Informationspräsentationsvorrichtung (10) und dem Informationspräsentationsendgerät (30) assoziiert ist, wenn das Informationspräsentationsendgerät (30) bedient wird, um eine Ladeeinrichtung zu reservieren.

2. Informationspräsentationsvorrichtung (10) nach Anspruch 1, wobei die Anreizausgabeeinheit (14)
die Zeit misst, die der Benutzer an der Geschäftseinrichtung verbracht hat, basierend auf dem Standort des Benutzers und/oder dem Fahrzeugstandort, und
einen Anreiz ausgibt, wenn die Einrichtungsnutzungsdaten von der Empfangseinheit (16) empfangen werden und die vom Benutzer verbrachte Zeit eine vorgeschriebene Zeit oder mehr beträgt.

3. Informationspräsentationsvorrichtung (10) nach einem der Ansprüche 1 bis 2, wobei
die Fahrzeugserviceeinrichtung eine Einrichtung zum Laden einer fahrzeuginternen Batterie ist.

4. Informationspräsentationsvorrichtung (10) nach einem der Ansprüche 1 bis 3, die ferner aufweist:
eine Einrichtungsverwaltungseinheit, die Reservierungen für die Fahrzeugserviceeinrichtung verwaltet, wobei
die Einrichtungsverwaltungseinheit die Reservierungen für die Fahrzeugserviceeinrichtung bestätigt, wenn die Empfangseinheit (16) Reservierungsdaten empfängt, die die Reservierung für die Fahrzeugserviceeinrichtung anzeigen.

5. Informationsdarstellungsvorrichtung (10) nach einem der Ansprüche 1 bis 4, die ferner aufweist:
eine Fahrzeugverwaltungseinheit, die das Fahrzeug verwaltet, wobei die Fahrzeugverwaltungseinheit eine Reiseroute über die Fahrzeugserviceeinrichtung berechnet, und
die Sendeeinheit (15) ein Signal sendet, um eine fahrzeuginterne Vorrichtung des Fahrzeugs und/oder ein Informationspräsentationsendgerät (30) zu veranlassen, die von der Fahrzeugverwaltungseinheit berechnete Reiseroute anzuzeigen.

6. Informationspräsentationsvorrichtung (10) nach einem der Ansprüche 1 bis 4, die ferner aufweist:
eine Fahrzeugverwaltungseinheit, die das Fahrzeug verwaltet, wobei die Fahrzeugverwaltungseinheit die fahrzeuginterne Batterie des Fahrzeugs verwaltet, und
die Sendeeinheit (15) die Serviceeinrichtungsdaten und die Geschäftseinrichtungsdaten sendet, wenn ein Ladezustand kleiner oder gleich einem vorgeschriebenen Ladezustand-Schwellenwert ist.

7. Informationspräsentationsvorrichtung (10) nach einem der Ansprüche 1 bis 6, wobei
die Empfangseinheit (16) die Einrichtungsnutzungsdaten von dem Fahrzeug oder dem Informationspräsentationsendgerät (30) empfängt.

8. Informationspräsentationsvorrichtung (10) nach einem der Ansprüche 1 bis 7, wobei
die Anreizausgabeeinheit (14) ferner konfiguriert ist, einen Anreiz auszugeben, wenn die Zeit, die der Benutzer in der Geschäftseinrichtung verbringt, größer oder gleich einer vorgeschriebenen Zeitdauer ist.

9. Informationspräsentationsvorrichtung (10) nach einem der Ansprüche 1 bis 8, wobei
das Informationspräsentationsendgerät (30) mit dem Fahrzeug basierend auf dem Standort des Fahrzeugs assoziiert, der dem Standort des Informationspräsentationsendgeräts entspricht.

10. Fahrzeugsteuervorrichtung (20), die in einem Fahrzeug vorgesehen ist, die aufweist:
eine Fahrzeugsendeeinheit (26) zum Senden von Fahrzeugstandortdaten, die einen Fahrzeugstandort des Fahrzeugs (20) anzeigen, wobei die Fahrzeugstandortdaten die aktuellen Standortinformationen des Fahrzeugs (20) sind und der Standort des Fahrzeugs (20) durch GPS gemessen wird;
eine Fahrzeugempfangseinheit (27) zum Empfangen von Serviceeinrichtungsdaten, die einen Standort einer Fahrzeugserviceeinrichtung in einer Umgebung des Fahrzeugstandorts oder in einer Umgebung einer Fahrroute des Fahrzeugs anzeigen, und von Geschäftseinrichtungsdaten, die Standortinformationen einer Geschäftseinrichtung enthalten, die mit der Fahrzeugserviceeinrichtung assoziiert ist, von einer Informationspräsentationsvorrichtung (10); und
eine Fahrzeuganzeigeeinheit zum Anzeigen von in den Geschäftseinrichtungsdaten enthaltenen Informationen, wobei die Fahrzeugsendeeinheit (26) an die Informationspräsentationsvorrichtung (10) Daten sendet, die Informationen enthalten, die anzeigen, dass das Fahrzeug die Fahrzeugserviceeinrichtung genutzt hat, wenn ein Benutzer die auf der Fahrzeuganzeigeeinheit angezeigte Fahrzeugserviceeinrichtung auswählt, und
die Fahrzeugempfangseinheit (27) einen Anreiz zur Nutzung der Geschäftseinrichtung empfängt, nachdem die Nutzung der ausgewählten Fahrzeugserviceeinrichtung eingeleitet wurde, wobei die Fahrzeugsteuervorrichtung (20) mit dem Fahrzeug und/oder einem Benutzer an Bord des Fahrzeugs assoziiert ist,
wobei
die Fahrzeugsteuervorrichtung (20) mit dem Fahrzeug basierend auf dem Standort des Fahrzeugs, der einem Standort der Fahrzeugsteuervorrichtung (20) entspricht, und/oder Kommunikationsinformationen zwischen der Informationspräsentationsvorrichtung (10) und der Fahrzeugsteuervorrichtung (20) assoziiert ist, wenn die Fahrzeugsteuervorrichtung (20) betrieben wird, um eine Ladeeinrichtung zu reservieren.

11. Informationspräsentationsendgerät (30), das von einem Benutzer an Bord eines Fahrzeugs (20) bedient wird, das aufweist:
eine Endgerätsendeeinheit (33) zum Senden von Standortdaten, die den Standort des Benutzers anzeigen, wobei die Standortdaten die aktuellen Standortinformationen des Fahrzeugs (20) sind und der Standort des Fahrzeugs (20) durch GPS gemessen wird;
eine Endgerätempfangseinheit (34) zum Empfangen von Serviceeinrichtungsdaten, die den Standort einer Fahrzeugserviceeinrichtung in der Umgebung des Standorts des Benutzers oder in der Umgebung der Fahrroute des Fahrzeugs angeben, und von Geschäftseinrichtungsdaten, die Standortinformationen einer Geschäftseinrichtung enthalten, die mit der Fahrzeugserviceeinrichtung assoziiert ist, von einer
Informationspräsentationsvorrichtung (10); und
eine Endgerätanzeigeeinheit zum Anzeigen von in den
Geschäftseinrichtungsdaten enthaltenen Informationen, wobei die Endgerätsendeeinheit (33) an die Informationspräsentationsvorrichtung (10) Daten sendet, die Informationen enthalten, die anzeigen, dass das Fahrzeug die Fahrzeugserviceeinrichtung genutzt hat, wenn der Benutzer die auf der Endgerätanzeigeeinheit angezeigte Fahrzeugserviceeinrichtung auswählt, und
die Endgerätempfangseinheit (34) von der Informationspräsentationsvorrichtung (10) einen Anreiz zur Nutzung der Geschäftseinrichtung empfängt, nachdem die Nutzung der ausgewählten Fahrzeugserviceeinrichtung eingeleitet wurde,
wobei das Informationspräsentationsendgerät (30) mit dem Fahrzeug (20) und/oder dem Benutzer an Bord des Fahrzeugs (20) assoziiert ist,
wobei
das Informationspräsentationsendgerät (30) mit dem Fahrzeug basierend auf dem Standort des Fahrzeugs, der einem Standort des
Informationspräsentationsendgeräts (30) entspricht, und/oder Kommunikationsinformationen zwischen der
Informationspräsentationsvorrichtung (10) und dem
Informationspräsentationsendgerät (30) assoziiert ist, wenn das Informationspräsentationsendgerät (30) bedient wird, um eine Ladeeinrichtung zu reservieren.

12. Informationspräsentationssystem (100), das aufweist: eine Fahrzeugsteuervorrichtung (20) nach Anspruch 10, das Informationspräsentationsendgerät (30) nach Anspruch 11 und die Informationspräsentationsvorrichtung (10) nach einem der Ansprüche 1 bis 9.

13. Informationspräsentationsverfahren zum Präsentieren von Informationen, die eine Fahrzeugserviceeinrichtung und eine Geschäftseinrichtung betreffen, unter Verwendung eines Prozessors (10), wobei der Prozessor Fahrzeugstandortdaten empfängt, die den Fahrzeugstandort eines Fahrzeugs (20) anzeigen, wobei die Fahrzeugstandortdaten die aktuellen Standortinformationen des Fahrzeugs (20) sind und der Standort des Fahrzeugs (20) durch GPS gemessen wird, wobei das Verfahren aufweist:
Extrahieren einer Fahrzeugserviceeinrichtung, die sich in der Umgebung des Fahrzeugstandorts oder der Fahrtroute des Fahrzeugs befindet, und einer mit der Fahrzeugserviceeinrichtung assoziierten Geschäftseinrichtung;
Senden der Serviceeinrichtungsdaten, die die Standortinformationen der extrahierten Fahrzeugserviceeinrichtung enthalten, und der Geschäftseinrichtungsdaten, die die Standortinformationen der extrahierten Geschäftseinrichtung enthalten, an das Fahrzeug (20) und/oder ein Informationspräsentationsendgerät (30);
Empfangen von Einrichtungsnutzungsdaten, die Informationen enthalten, die anzeigen, dass das Fahrzeug die Fahrzeugserviceeinrichtung genutzt hat,
wobei die Einrichtungsnutzungsdaten von dem Fahrzeug (20), einem Informationspräsentationsendgerät (30) oder einer Fahrzeugservice-/Geschäftseinrichtung (40) gesendet werden;
Ausgeben eines Anreizes zur Nutzung der Geschäftseinrichtung an einen Benutzer an Bord des Fahrzeugs oder das Fahrzeug beim Empfang der Einrichtungsnutzungsdaten;
Senden von Daten, die Informationen enthalten, die den ausgegebenen Anreiz betreffen, an ein Informationspräsentationsendgerät (30), das mit dem Fahrzeug (20) und/oder dem Benutzer an Bord des Fahrzeugs (20) assoziiert ist;
wobei das Informationspräsentationsendgerät (30) mit dem Fahrzeug basierend auf dem Standort des Fahrzeugs, der einem Standort des Informationspräsentationsendgeräts (30) entspricht, und/oder Kommunikationsinformationen zwischen dem Prozessor (10) und dem Informationspräsentationsendgerät (30) assoziiert ist, wenn das Informationspräsentationsendgerät (30) bedient wird, um eine Ladeeinrichtung zu reservieren.

## Revendications

1. Dispositif de présentation d'informations (10), comprenant :
une unité de réception (16) destinée à recevoir des données de localisation de véhicule indiquant l'emplacement d'un véhicule (20), lesdites données de localisation du véhicule étant les informations d'emplacement actuel du véhicule (20), et la localisation du véhicule (20) étant mesurée par GPS ;
une unité de transmission (15) destinée à transmettre au véhicule (20) et/ou à un terminal de présentation d'informations (30) des données d'installation d'entretien de véhicule comprenant des informations de localisation d'une installation d'entretien de véhicule à proximité de l'emplacement du véhicule ou à proximité d'un trajet de déplacement du véhicule, et des données d'installation commerciale comprenant des informations de localisation d'une installation commerciale associée à l'installation d'entretien de véhicule ; et
une unité d'émission d'incitation (14) destinée à émettre une incitation à utiliser l'installation commerciale, où
l'unité de réception (16) reçoit des données d'utilisation d'installation, comprenant des informations indiquant que le véhicule a utilisé l'installation d'entretien de véhicule, lesdites données d'utilisation d'installation étant transmises par le véhicule (20), un terminal de présentation d'informations (30) et/ou une installation d'entretien de véhicule/commerciale (40), et
l'unité d'émission d'incitation (14) émet l'incitation à un utilisateur à bord du véhicule, ou au véhicule, lorsque les données d'utilisation d'installation sont reçues par l'unité de réception,
l'unité de transmission (15) transmet des données, comprenant des informations relatives à l'incitation émise par l'unité d'émission d'incitation (14), à un terminal de présentation d'informations (30) associé au véhicule (20) et/ou associé à l'utilisateur à bord du véhicule (20), et
le terminal de présentation d'informations (30) est associé au véhicule sur la base de l'emplacement du véhicule correspondant à la localisation du terminal de présentation d'informations (30) et/ou d'informations de communication entre le dispositif de présentation d'informations (10) et le terminal de présentation d'informations (30) lorsque le terminal de présentation d'informations (30) est utilisé pour réserver une installation de charge.

2. Dispositif de présentation d'informations (10) selon la revendication 1, où l'unité d'émission d'incitation (14)
mesure le temps passé par l'utilisateur dans l'installation commerciale sur la base de la localisation de l'utilisateur et/ou de l'emplacement du véhicule, et émet une incitation lorsque les données d'utilisation d'installation sont reçues par l'unité de réception (16) et que le temps passé par l'utilisateur est égal ou supérieur à une durée prescrite.

3. Dispositif de présentation d'informations (10) selon l'une des revendications 1 à 2, où
l'installation d'entretien de véhicule est une installation permettant de charger la batterie du véhicule.

4. Dispositif de présentation d'informations (10) selon l'une des revendications 1 à 3, comprenant en outre
une unité de gestion d'installation qui gère les réservations pour l'installation d'entretien de véhicule aux véhicules, où
l'unité de gestion d'installation confirme les réservations pour l'installation d'entretien de véhicule, lorsque l'unité de réception (16) reçoit des données de réservation indiquant la réservation pour l'installation d'entretien de véhicule.

5. Dispositif de présentation d'informations (10) selon l'une des revendications 1 à 4, comprenant en outre
une unité de gestion de véhicule qui gère le véhicule, où ladite unité de gestion de véhicule calcule un trajet de déplacement via l'installation d'entretien de véhicule, et
l'unité de transmission (15) transmet un signal pour qu'un dispositif embarqué et/ou un terminal de présentation d'informations (30) affiche le trajet de déplacement calculé par l'unité de gestion de véhicule.

6. Dispositif de présentation d'informations (10) selon l'une des revendications 1 à 4, comprenant en outre
une unité de gestion de véhicule qui gère le véhicule, où l'unité de gestion de véhicule gère la batterie du véhicule, et
l'unité de transmission (15) transmet les données d'installation d'entretien de véhicule et les données d'installation commerciale si l'état de charge est inférieur ou égal à un seuil d'état de charge prescrit.

7. Dispositif de présentation d'informations (10) selon l'une des revendications 1 à 6, où
l'unité de réception (16) reçoit les données d'utilisation d'installation du véhicule ou du terminal de présentation d'informations (30).

8. Dispositif de présentation d'informations (10) selon l'une des revendications 1 à 7, où
l'unité d'émission d'incitation (14) est en outre configurée pour émettre une incitation lorsque le temps passé par l'utilisateur dans l'établissement commercial est supérieur ou égal à une durée prescrite.

9. Dispositif de présentation d'informations (10) selon l'une des revendications 1 à 8, où
le terminal de présentation d'informations (30) est associé au véhicule sur la base de l'emplacement du véhicule correspondant à la localisation du terminal de présentation d'informations.

10. Dispositif de commande de véhicule (20) installé dans un véhicule, comprenant :
une unité de transmission de véhicule (26) destinée à transmettre des données de localisation de véhicule indiquant l'emplacement du véhicule (20), lesdites données de localisation du véhicule étant les informations d'emplacement actuel du véhicule (20), et la localisation du véhicule (20) étant mesurée par GPS), et la localisation du véhicule (20) étant mesurée par GPS ;
une unité de réception de véhicule (27) destinée à recevoir d'un dispositif de présentation d'informations (10) des données d'installation d'entretien de véhicule indiquant la localisation d'une installation d'entretien de véhicule à proximité de l'emplacement du véhicule ou à proximité d'un trajet de déplacement du véhicule, et des données d'installation commerciale comprenant des informations de localisation d'une installation commerciale associée à l'installation d'entretien de véhicule ; et
une unité d'affichage de véhicule destinée à afficher des informations contenues dans les données d'installation commerciale, où l'unité de transmission du véhicule (26) transmet au dispositif de présentation d'informations (10) des données comprenant des informations indiquant que le véhicule a utilisé l'installation d'entretien de véhicule lorsqu'un utilisateur sélectionne l'installation d'entretien de véhicule affichée sur l'unité d'affichage de véhicule, et
l'unité de réception de véhicule (27) reçoit une incitation à utiliser l'installation commerciale après initialisation de l'utilisation de l'installation d'entretien de véhicule sélectionnée, le dispositif de commande de véhicule (20) étant associé au véhicule et/ou à un utilisateur à bord du véhicule,
où
le dispositif de commande de véhicule (20) est associé au véhicule sur la base de l'emplacement du véhicule correspondant à la localisation du dispositif de commande de véhicule (20) et/ou d'informations de communication entre le dispositif de présentation d'informations (10) et le dispositif de commande de véhicule (20) lorsque le dispositif de commande de véhicule (20) est utilisé pour réserver une installation de charge.

11. Terminal de présentation d'informations (30) commandé par un utilisateur à bord d'un véhicule (20), comprenant :
une unité de transmission de terminal (33) destinée à transmettre des données de localisation indiquant l'emplacement de l'utilisateur, lesdites données de localisation étant les informations d'emplacement actuel du véhicule (20), et la localisation du véhicule (20) étant mesurée par GPS ;
une unité de réception de terminal (34) destinée à recevoir d'un dispositif de présentation d'informations (10) des données d'installation d'entretien de véhicule indiquant la localisation d'une installation d'entretien de véhicule à proximité de l'emplacement de l'utilisateur ou à proximité d'un trajet de déplacement du véhicule, et des données d'installation commerciale comprenant des informations de localisation d'une installation commerciale associée à l'installation d'entretien de véhicule ; et
une unité d'affichage de terminal pour afficher des informations contenues dans les données d'installation commerciale, où
l'unité de transmission de terminal (33) transmet au dispositif de présentation d'informations (10) des données comprenant des informations indiquant que le véhicule a utilisé l'installation d'entretien de véhicule lorsque l'utilisateur sélectionne l'installation d'entretien de véhicule affichée sur l'unité d'affichage de terminal, et
l'unité de réception de terminal (34) reçoit du dispositif de présentation d'informations (10) une incitation à utiliser l'installation commerciale après initialisation de l'utilisation de l'installation d'entretien de véhicule sélectionnée,
le terminal de présentation d'informations (30) étant associé au véhicule (20) et/ou associé à l'utilisateur à bord du véhicule (20),
où
le terminal de présentation d'informations (30) est associé au véhicule sur la base de l'emplacement du véhicule correspondant à la localisation du terminal de présentation d'informations (30) et/ou d'informations de communication entre le dispositif de présentation d'informations (10) et le terminal de présentation d'informations (30) lorsque le terminal de présentation d'informations (30) est utilisé pour réserver une installation de charge.

12. Système de présentation d'informations (100), comprenant : un dispositif de commande de véhicule (20) selon la revendication 10, le terminal de présentation d'informations (30) selon la revendication 11, et le dispositif de présentation d'informations (10) selon l'une des revendications 1 à 9.

13. Procédé de présentation d'informations relatives à une installation d'entretien de véhicule et à une installation commerciale au moyen d'un processeur (10), où ledit processeur reçoit des données de localisation de véhicule indiquant l'emplacement d'un véhicule (20), lesdites données de localisation étant les informations d'emplacement actuel du véhicule (20), et la localisation du véhicule (20) étant mesurée par GPS,
ledit procédé comprenant :
l'extraction d'une installation d'entretien de véhicule située à proximité de l'emplacement du véhicule ou à proximité du trajet de déplacement du véhicule,
et d'une installation commerciale associée à l'installation d'entretien de véhicule ;
la transmission au véhicule (20) et/ou à un terminal de présentation d'informations (30) des données d'installation d'entretien de véhicule,
comprenant les informations de localisation de l'installation d'entretien de véhicule extraite, et les données d'installation commerciale, comprenant les informations de localisation de l'installation commerciale extraite ;
la réception de données d'utilisation d'installation comprenant des informations indiquant que le véhicule a utilisé l'installation d'entretien de véhicule, lesdites données d'utilisation d'installation étant transmises par le véhicule (20), un terminal de présentation d'informations (30) ou une installation d'entretien de véhicule/commerciale (40) ;
la transmission d'une incitation à utiliser l'installation commerciale à un utilisateur à bord du véhicule, ou au véhicule, lorsque les données d'utilisation d'installation sont reçues ;
la transmission de données, comprenant des informations relatives à l'incitation émise, à un terminal de présentation d'informations (30) associé au véhicule (20) et/ou associé à l'utilisateur à bord du véhicule (20) ;
où le terminal de présentation d'informations (30) est associé au véhicule sur la base de l'emplacement du véhicule correspondant à la localisation du terminal de présentation d'informations (30) et/ou d'informations de communication entre le processeur (10) et le terminal de présentation d'informations (30) lorsque le terminal de présentation d'informations (30) est utilisé pour réserver une installation de charge.
